(19) Europäisches Patentamt / European Patent Office / Office européen des brevets

(11) **EP 3 990 950 B1**

(12) **EUROPÄISCHE PATENTSCHRIFT**

(45) Veröffentlichungstag und Bekanntmachung des Hinweises auf die Patenterteilung:
**18.03.2026   Patentblatt 2026/12**

(21) Anmeldenummer: **20734923.4**

(22) Anmeldetag: **25.06.2020**

(51) Internationale Patentklassifikation (IPC):
**G01V 1/30** (2006.01)      **G01V 1/36** (2006.01)
**G01V 1/00** (2024.01)

(52) Gemeinsame Patentklassifikation (CPC):
**G01V 1/001;** G01V 1/303; G01V 1/307;
G01V 1/362; G01V 2210/63

(86) Internationale Anmeldenummer:
**PCT/EP2020/067864**

(87) Internationale Veröffentlichungsnummer:
**WO 2020/260474 (30.12.2020 Gazette 2020/53)**

(54) **VERFAHREN, VORRICHTUNG UND COMPUTERPROGRAMM ZUM DETEKTIEREN VON EIN ODER MEHREREN OBJEKTEN IM MEERESBODEN**

METHOD, DEVICE AND COMPUTER PROGRAM FOR DETECTING ONE OR MORE OBJECTS IN THE SEABED

PROCÉDÉ, DISPOSITIF ET PROGRAMME INFORMATIQUE POUR LA DÉTECTION D'UN OU PLUSIEURS OBJETS DANS LE FOND MARIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **28.06.2019   DE 102019117587**

(43) Veröffentlichungstag der Anmeldung:
**04.05.2022   Patentblatt 2022/18**

(73) Patentinhaber: **Fraunhofer-Gesellschaft zur Förderung**
**der angewandten Forschung e.V.**
**80686 München (DE)**

(72) Erfinder:
• **RAMOS CORDOVA, Carlos**
  **28359 Bremen (DE)**
• **PREU, Benedict**
  **28359 Bremen (DE)**
• **STANGE, Nikolas**
  **28359 Bremen (DE)**
• **KEIL, Hanno**
  **28359 Bremen (DE)**
• **SPIEß, Volkhard**
  **28359 Bremen (DE)**
• **WENAU, Stefan**
  **28359 Bremen (DE)**

(74) Vertreter: **2SPL Patentanwälte PartG mbB**
**Landaubogen 3**
**81373 München (DE)**

(56) Entgegenhaltungen:
CN-A- 107 817 523        US-A1- 2006 015 259
US-A1- 2014 226 437

• LUETH S ET AL: "FRESNEL VOLUME MIGRATION OF MULTICOMPONENT DATA", GEOPHYSICS, SOCIETY OF EXPLORATION GEOPHYSICISTS, US, vol. 70, no. 6, 1 November 2005 (2005-11-01), pages S121 - S129, XP001236445, ISSN: 0016-8033, DOI: 10.1190/1.2127114
• BERKOVITCH A ET AL: "Diffraction imaging by multifocusing", GEOPHYSICS, SOCIETY OF EXPLORATION GEOPHYSICISTS, US, vol. 74, no. Suppl. of 6, 1 November 2009 (2009-11-01), pages WCA75 - WCA81, XP001550453, ISSN: 0016-8033, DOI: 10.1190/1.3198210

- **ERNEST R. KANASEWICH ET AL: "Imaging discontinuities on seismic sections", GEOPHYSICS, vol. 53, no. 3, 1 March 1988 (1988-03-01), US, pages 334 - 345, XP055725915, ISSN: 0016-8033, DOI: 10.1190/1.1442467**
- **BANSAL AND M G IMHOF R: "Diffraction enhancement in prestack seismic data", GEOPHYSICS, SOCIETY OF EXPLORATION GEOPHYSICISTS, US, vol. 70, no. 3, 1 May 2005 (2005-05-01), pages V73 - V79, XP008126772, ISSN: 0016-8033, DOI: 10.1190/1.1926577**

## Beschreibung

### Technisches Gebiet

Ausführungsbeispiele befassen sich mit einem Verfahren, einem Computerprogramm sowie einer Vorrichtung zum Detektieren von ein oder mehreren Objekten im Meeresboden, genauer, aber nicht ausschließlich, mit der Detektion von Objekten basierend auf einer Streuung eines akustischen Signals an den ein oder mehreren Objekten.

### Hintergrund

Die Lokalisierung von Objekten verschiedenster Größen in marinen Sedimenten ist in vielen Fällen eine Voraussetzung für die Konstruktion von mariner Infrastruktur sowie für die wirtschaftliche Nutzung des Meeresbodens, z.B. bei Windenergieanlagen, Pipelines, Plattformen, Kabeltrassen, Bohrungen. Solche Objekte können Findlinge oder andere geologische Inhomogenitäten sein, aber auch nicht-detonierte Sprengkörper (UneXploded Ordnance: UXO) die in den obersten Sedimentschichten liegen. Findlinge stellen beispielsweise ein Problem in den Quartären Ablagerungen der Nord- und Ostsee und generell in vielen Flachmeergebieten der gemäßigten und höheren Breiten für die Installation von Offshoreinfrastruktur (Infrastruktur, die abseits der Küste auf den Meeresboden gebaut ist) dar, während UXO beispielsweise in Nord- und Ostsee zu finden sind und eine aufwendige Detektion und Räumung vor der Konstruktion von Offshoreinfrastruktur erfordern können. Herkömmliche Methoden für die Erkundung des Untergrundes wie 2D/3D Reflektionsseismik, hochauflösende Akustik sowie Magnetik zeigen unterschiedliche Limitierungen bei der Objektdetektion in Sedimenten.

Verschiedene Schriften befassen sich mit seismischen Verfahren, die auf der Diffraktion von Wellen an Diffraktoren basieren. So schafft beispielsweise die Chinesische Patentoffenbarung CN 107 817523 A ein Modellierungsverfahren für seismische Erkundungen, und insbesondere ein Verfahren zur Analyse der Migrationsgeschwindigkeiten von Diffraktionswellen. Berkovitch et al: "Diffraction imaging by multifocusing", GEOPHYSICS, Bd. 74, November 2009, Kanasewich et al: "Imaging discontinuities on seismic sections",GEOPHYSICS, Bd. 53, März 1988, und Bansal und Imhof: "Diffraction enhancement in prestack seismic data", GEOPHYSICS, Bd. 70, Mai 2005, befassen sich ebenfalls mit seismischen Analysen, die auf Diffraktionen basieren.

Die Lokalisierung von Objekten in marinen Sedimenten ist eine Aufgabe beim Ausbau der Offshoreinfrastruktur, als auch für Bohrungen oder für Gründungen von z.B. Plattformen oder Windenergieturbinen, die mit konventionellen Methoden häufig nur unzureichend gelöst werden kann.

### Zusammenfassung

Die vorliegende Erfindung bezieht sich auf eine Detektion von ein oder mehreren Objekten im Meeresboden, die durch eine Verarbeitung von Daten eines Empfängersignals, das eine Streuung (Diffraktion) von mehreren akustischen Signalen an den ein oder mehreren Objekten abbildet, ermöglicht wird. Die Erfindung ist durch die beigefügten Ansprüche definiert.

Die Erfindung basiert darauf, dass zur Detektion der ein oder mehreren Objekte die Streuung der mehreren akustischen Signale an ein oder mehreren Objekten genutzt wird. Um die Streuung auswerten zu können werden in der vorliegenden Offenbarung Anteile des Empfängersignals, die von verschiedenen Empfängern und/oder von verschiedenen Zeitpunkten stammen, zu Punkten eines Detektionsrasters zugewiesen. Da diese Anteile von mehreren Empfängern und/oder von mehreren Zeitpunkten stammen wird eine Laufzeitkorrektur auf diese Anteile angepasst, etwa um einen Versatz zwischen den Empfängern und zwischen den Empfängern und der Quelle auszugleichen. Anschließend werden die laufzeitkorrigierten Anteile in ein gemeinsames Signal zusammengefasst ("gestapelt"), anhand dessen festgestellt werden kann, ob sich bei einer bestimmten Tiefe (eines Punkts des Detektionsrasters) ein Objekt befindet, das sich mittels der Diffraktionen detektieren lässt.

Ausführungsbeispiele schaffen ein Verfahren zum Detektieren von ein oder mehreren Objekten im Meeresboden. Das Verfahren umfasst ein Erhalten eines Empfängersignals. Das Empfängersignal basiert auf einer Streuung von mehreren akustischen Signalen an den ein oder mehreren Objekten im Meeresboden. Das Empfängersignal ist durch eine Mehrzahl von Empfängern generiert. Das Verfahren umfasst ferner ein Gruppieren von Anteilen des Empfängersignals zu Punkten eines Detektionsrasters. Das Detektionsraster stellt ein Raster dar, an dessen Punkten die ein oder mehreren Objekte lokalisiert werden. Das Verfahren umfasst ferner ein Durchführen einer Laufzeitkorrektur der Anteile des Empfängersignals in Bezug auf die Punkte des Detektionsrasters. Das Verfahren umfasst ferner ein Zusammenfassen der laufzeitkorrigierten Anteile des Empfängersignals an den Punkten des Detektionsrasters. Das Verfahren umfasst ferner ein Detektieren der ein oder mehreren Objekte an den Punkten des Detektionsrasters basierend auf der Zusammenfassung der laufzeitkorrigierten Anteile des Empfängersignals. Die Detektion der ein oder mehreren Objekte basiert auf der Streuung der mehreren akustischen Signale an den ein oder mehreren Objekten.

Durch Gruppieren der Anteile des Empfängersignals zu Punkten eines Detektionsrasters, Durchführen einer Laufzeitkorrektur und anschließendes Zusammenfassen der Anteile wird eine Detektion der ein oder mehreren Objekte basierend auf der Streuung des akustischen Signals, die von einem großen Empfänger-Array aufgenommen wird, ermöglicht oder verbessert.

Beispielsweise kann eine Wellenlänge der mehreren akustischen Signale an eine erwartete Größe der ein oder mehreren Objekte angepasst sein. Dies ermöglicht es, eine Streuung des akustischen Signals an den ein oder mehreren Objekten wahrzunehmen. Ein Abstand zwischen benachbarten Empfängern der Mehrzahl von Empfängern kann beispielsweise höchstens so groß sein wie die Hälfte der Wellenlänge der mehreren akustischen Signale. Dies vermeidet ein Aliasing in der Detektion der ein oder mehreren Objekte.

Die ein oder mehreren Objekte werden basierend auf einer Amplitude der Zusammenfassung der laufzeitkorrigierten Anteile des Empfängersignals detektiert. Die Amplitude kann beispielsweise eine einfach auszuwertende und zu visualisierende Möglichkeit darstellen, um das Vorhandensein eines Objekts an einem Punkt des Detektionsrasters er erkennen.

Erfindungsgemäß umfasst das Verfahren ferner ein Berechnen einer Einhüllenden der Amplitude der Zusammenfassung der laufzeitkorrigierten Anteile des Empfängersignals. Die ein oder mehreren Objekte werden basierend auf der Einhüllenden detektiert. Dies ermöglicht eine verbesserte Darstellung und Interpretation der Detektion.

Das Verfahren kann ferner ein Berechnen einer Kohärenzfunktion basierend auf der Zusammenfassung der laufzeitkorrigierten Anteile des Empfängersignals. Die Kohärenzfunktion kann auf einer Ähnlichkeit zwischen zeitlich aufeinanderfolgenden Anteilen des Empfängersignals basieren. Die ein oder mehreren Objekte können basierend auf der Kohärenzfunktion detektiert werden. Dabei kann die Kohärenzfunktion beispielsweise abbilden, wie ähnlich sich benachbarte Werte in der Zusammenfassung der laufzeitkorrigierten Anteile des Empfängersignals sind, etwa um in einem nachfolgenden Schritt solche Werte weniger stark zu bewerten, die "Ausreißer" darstellen, d.h. Ausreißer in der Zusammenfassung der laufzeitkorrigierten Anteile des Empfängersignals können durch die Kohärenzfunktion unterdrückt werden.

In manchen Ausführungsbeispielen umfasst das Verfahren ein Berechnen einer gewichteten Einhüllenden basierend auf der Einhüllenden und basierend auf der Kohärenzfunktion. Die gewichtete Einhüllende bietet eine verbesserte Interpretierbarkeit und Aussagekraft als die Zusammenfassung der laufzeitkorrigierten Anteile des Empfängersignals.

Beispielsweise kann die Kohärenzfunktion auf einer Semblance-Analyse basieren. Semblance-Analysen ermöglichen eine Verbesserung der Auflösung von seismischen Daten, obwohl Hintergrundrauschen im Empfängersignal vorhanden ist.

Das Verfahren kann ferner ein Anpassen der Zusammenfassung der laufzeitkorrigierten Anteile des Empfängersignals umfassen, um eine Signalverstärkung von Signalanteilen zu erreichen, die auf der Streuung der mehreren akustischen Signale an weiter entfernten Objekten der ein oder mehreren Objekte basieren. Dies ermöglicht eine relative Angleichung der Amplitude von Diffraktionen, die weiter von den Empfängern entfernt stattfinden.

In manchen Ausführungsbeispielen umfasst das Verfahren ferner ein Identifizieren einer Reflektion der Streuung des akustischen Signals an den ein oder mehreren Objekten. Die Reflektion der Streuung des akustischen Signals an den ein oder mehreren Objekten kann in der Detektion der ein oder mehreren Objekte außer Betracht gelassen werden. So können beispielsweise Echos der Diffraktionen an anderen Objekten ausgefiltert werden.

In manchen Ausführungsbeispielen kann für die Laufzeitkorrektur eine konstante seismische Geschwindigkeit angenommen werden. Dies ermöglicht eine vereinfachte Berechnung der Laufzeitkorrektur, mit einer ggf. verringerten Genauigkeit.

In manchen Ausführungsbeispielen kann die Laufzeitkorrektur für eine Spanne von möglichen seismischen Geschwindigkeiten durchgeführt werden (sog. Radon-Transformation). Eine seismische Geschwindigkeit aus der Spanne von möglichen seismischen Geschwindigkeiten kann basierend auf einer Größe eines lokalen Maximums in der entsprechenden Zusammenfassung der laufzeitkorrigierten Anteile des Empfängersignals für die Laufzeitkorrektur ausgewählt werden. Die Größe des lokalen Maximums kann dabei als Indikator genutzt werden, dass die gewählte Durchschnittsgeschwindigkeit ausreichend akkurat ist.

Alternativ können für die Laufzeitkorrektur auf die Punkte des Detektionsrasters abgestimmte seismische Geschwindigkeiten für verschiedene Materialschichten zwischen der Mehrzahl von Empfängern und den Punkten des Detektionsrasters verwendet werden. Dies ermöglicht eine möglichst präzise Definition der der Laufzeitkorrektur zugrunde gelegten seismischen Geschwindigkeiten.

In zumindest manchen Ausführungsbeispielen werden die Anteile des Empfängersignals basierend auf einer Distanz der Punkte des Detektionsrasters zu den Empfängern der Mehrzahl von Empfängern und zu zumindest einer Signalquelle des akustischen Signals zu den Punkten des Detektionsrasters gruppiert. Dies kann etwa als Grundlage dafür genutzt werden, welche Anteile des Empfängersignals für welchen Punkt auf dem Detektionsraster in Betracht gezogen werden.

Beispielsweise können die Anteile des Empfängersignals für jedes akustische Signal separat zu den Punkten des Detektionsrasters gruppiert werden (sog. Real Aperture Processing, Verarbeitung anhand der realen Apertur).

Alternativ können die Anteile des Empfängersignals für eine vordefinierte Anzahl von Zeitpunkten in der vordefinierten zeitlichen Abfolge zusammengefasst zu den Punkten des Detektionsrasters gruppiert werden (sog. Synthetic Aperture Processing, Verarbeitung mit Hilfe einer synthetischen Apertur). Dadurch lässt sich die Auflösung in Bewegungsrichtung erhöhen.

In manchen Ausführungsbeispielen können die Anteile des Empfängersignals für eine vordefinierte Distanz der Punkte des Detektionsrasters zu den Empfängern der Mehrzahl von Empfängern und zu der zumindest einen Signalquelle zu den Punkten des Detektionsrasters gruppiert werden. Dies ermöglicht eine Verarbeitung der voraussichtlich für einen Punkt des Detektionsrasters relevanten Anteile des Empfängersignals.

In zumindest manchen Ausführungsbeispielen umfasst das Empfängersignal einen ersten Signalanteil, der auf der Streuung der mehreren akustischen Signale an den ein oder mehreren Objekten basiert. Das Empfängersignal kann ferner einen zweiten Signalanteil umfassen, der auf einer Reflektion der mehreren akustischen Signale basiert. Das Verfahren kann ein Unterdrücken des zweiten Signalanteils gegenüber dem ersten Signalanteil umfassen. Das Gruppieren der Anteile des Empfängersignals, das Durchführen der Laufzeitkorrektur, das Zusammenfassen der laufzeitkorrigierten Anteile und/oder die Detektion der ein oder mehreren Objekte können (ausschließlich oder weit überwiegend) auf dem ersten Signalanteil basieren. Dies Ermöglicht ein Unterdrücken oder Entfernen der Reflektion der akustischen Signale aus dem Empfängersignal, um die Detektion der ein oder mehreren Objekte anhand der Diffraktion zu erleichtern oder zu verbessern. In anderen Worten kann das Verfahren ein Unterdrücken, in dem Empfängersignal, einer Reflektion der mehreren akustischen Signale umfassen.

In manchen Ausführungsbeispielen basiert das Unterdrücken des zweiten Signalanteils, also der Reflektion der mehreren akustischen Signale, auf einer Eigenwertzerlegung einer laufzeitkorrigierten Fassung des Empfängersignals. Dies ermöglicht ein effizientes Unterdrücken des zweiten Signalanteils.

In Ausführungsbeispielen sind die zumindest eine Signalquelle und die Mehrzahl von Empfängern dazu vorgesehen, von einem Schiff entlang einer Wasseroberfläche oberhalb des Meeresbodens gezogen zu werden. Das Detektionsraster kann beispielsweise ein zweidimensionales Detektionsraster sein. Das zweidimensionale Detektionsraster kann entlang einer Fahrtrichtung des Schiffs und entlang einer Tiefenachse zwischen der zumindest einen Signalquelle und/oder der Mehrzahl von Empfängern und dem Meeresboden aufgespannt werden. Dies ermöglicht eine systematische Detektion von Objekten im Meeresboden.

Ausführungsbeispiele schaffen ferner ein Programm mit einem Programmcode zum Durchführen des Verfahrens wenn der Programmcode auf einem Computer, einem Prozessor, einem Kontrollmodul oder einer programmierbaren Hardwarekomponente ausgeführt wird.

Ausführungsbeispiele schaffen ferner eine Vorrichtung zum Detektieren von ein oder mehreren Objekten im Meeresboden. Die Vorrichtung umfasst eine Schnittstelle zum Erhalten eines Empfängersignals. Das Empfängersignal basiert auf einer Streuung von mehreren akustischen Signalen an den ein oder mehreren Objekten im Meeresboden. Das Empfängersignal ist durch eine Mehrzahl von Empfängern generiert. Die Vorrichtung umfasst ferner ein Verarbeitungsmodul, ausgebildet zum Gruppieren von Anteilen des Empfängersignals zu Punkten eines Detektionsrasters. Das Detektionsraster stellt ein Raster dar, an dessen Punkten die ein oder mehreren Objekte lokalisiert werden. Das Verarbeitungsmodul ist ferner ausgebildet zum Durchführen einer Laufzeitkorrektur der Anteile des Empfängersignals in Bezug auf die Punkte des Detektionsrasters. Das Verarbeitungsmodul ist ferner ausgebildet zum Zusammenfassen der laufzeitkorrigierten Anteile des Empfängersignals an den Punkten des Detektionsrasters. Das Verarbeitungsmodul ist ferner ausgebildet zum Detektieren der ein oder mehreren Objekte an den Punkten des Detektionsrasters basierend auf der Zusammenfassung der laufzeitkorrigierten Anteile des Empfängersignals. Die Detektion der ein oder mehreren Objekte basiert auf der Streuung der mehreren akustischen Signale an den ein oder mehreren Objekten.

## Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:

Fign. 1a und 1b zeigen Flussdiagramme von Ausführungsbeispielen eines Verfahrens zum Detektieren von ein oder mehreren Objekten im Meeresboden;

Fig. 1c zeigt ein Blockdiagramm eines Ausführungsbeispiels einer Vorrichtung zum Detektieren von ein oder mehreren Objekten im Meeresboden.

Fig. 2 zeigt ein schematisches Diagramm eines Common-Mid-Point- und Common-Fault-Point-Sortierungsprinzips; und

Fign. 3a bis 3h zeigen eine Darstellung von Verarbeitungsschritten anhand von synthetischen Daten.

**Beschreibung**

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

Zumindest manche Ausführungsbeispiele der vorliegenden Offenbarung befassen sich mit einer Untergrundcharakterisierung von Objekten mit Hilfe einer Verarbeitung von Punktdiffraktoren (engl. "Object Subsurface Characterisation - Point Diffractor Processing"). Dabei kann für die Untergrundcharakterisierung beispielsweise eine Anordnung verwendet werden, bei der die akustische Quelle und die Empfänger entkoppelt sind. Ausführungsbeispiele umfassen die Verarbeitung von seismischen/akustischen Daten zum Zweck der Detektion von Punktdiffraktoren in marinen Sedimenten. Die Datenverarbeitung stellt sich dabei als eine Abfolge von Datenverarbeitungsschritten dar. Diese Schritte sind für seismische/akustische Daten optimiert, die speziellen Anforderungen an die Aufnahmegeometrie stellen, d.h. Daten die die Voraussetzung zur Verarbeitung durch die hier gezeigten Schritte erfüllen. Die beschriebene Datenverarbeitung ist optimiert zur Anwendung auf Daten die mit einer spezialisierten Akquisitionseinheit gewonnen wurden, allerdings können die Bearbeitungsschritte auch auf andere akustische/seismische Daten angewandt werden. Die Begriffe seismische Daten und akustische Daten sind für diese Anwendung als synonym zu verstehen, da der Frequenzgehalt der Daten über dem generell angenommenen Grenzbereich zwischen Seismik und Akustik liegt (ca. 100 - 1000 Hz). Das beschriebene Prinzip der Datenverarbeitung kann aber auch mit seismischen/akustischen Daten durchgeführt werden die außerhalb dieses Frequenzbereiches liegen.

Voraussetzung für zumindest manche Ausführungsbeispiele des vorliegenden Konzepts ist die Aufzeichnung eines Wellenfeldes als Zeitreihen (in einem Empfängersignal), wobei die Positionen der Aufzeichnungseinheiten und der Signalquellen bekannt und Quelle und Aufzeichnung zeitlich synchronisiert sind. Die später genauer beschriebenen Schritte münden in ein Untergrundmodell, das aus einer statistischen Auswertung von Spurengruppen resultiert. Das Resultat der Datenverarbeitung ist ein seismisches/akustisches Datenvolumen des Untersuchungsgebiets in welchem Punktdiffraktoren an ihren jeweiligen räumlichen Positionen von der Umgebung durch ihre Amplitude, d.h. Signalstärke, unterschieden werden können. Dieses Datenvolumen ermöglicht in der Folge die Kartierung von Punktdiffraktoren im Untersuchungsgebiet.

Obwohl diffraktierte Wellen wichtige Informationen tragen, gibt es nur wenige etablierte Techniken im Bereich der Explorationsgeophysik, die diesen Anteil eines seismischen Wellenfeldes zur Untersuchung des Untergrundes nutzbar machen (Landa and Keydar, 1998: "Seismic monitoring of diffraction images for detection of local heterogeneities."; Moser and Howard, 2008: "Diffraction imaging in depth"). Ausgangspunkt für solche Diffraktionen können Findlinge oder andere geologische Inhomogenitäten sein, aber auch nicht-detonierte Sprengkörper (UneXploded Ordnance: UXO), die in den obersten Sedimentschichten liegen. Diese Objekte bzw. Inhomogenitäten erzeugen Punktdiffraktionen, also streuen das Wellenfeld kugelförmig als sekundäre Quelle, wenn sie sich sowohl durch ihre physikalischen Eigenschaften von der Umgebung unterscheiden als auch eine geeignete Größe besitzen (Wu and Aki, 1985: "Elastic wave scattering by a random medium and the small-scale inhomogeneities in the lithosphere", 1988: "Introduction: Seismic Wave Scattering in Three-dimensionally Heterogeneous Earth, in: Scattering and Attenuations of Seismic Waves, Part I"). Die wichtigsten physikalischen Eigenschaften stellen dabei meist die Dichte und die Ausbreitungsgeschwindigkeit von seismischen Wellen innerhalb des Objektes bzw. im umgebenden Untergrund dar. Eine geeignete Objektgröße liegt vor, wenn die Wellenlänge der seismischen Welle das Objekt zu radialer Resonanz anregt. Dafür kann der Radius des Objektes in einem Größenbereich von ~20% bis ~200% der Wellenlänge liegen. Auf Grundlage eines hochgenau aufgezeichneten Wellenfeldes mit Akquisitionsparametern die auf die abzubildenden Objekte abgestimmt sind kann die hier beschriebene Offenbarung Objekte und Inhomogenitäten verschiedener Größen in marinen Sedimenten abbilden und charakterisieren.

Generell gibt es für die Lokalisierung von Objekten unter dem Meeresboden eine Reihe von Methoden mit jeweils spezifischen Vor- und Nachteilen. Es lässt sich zusammenfassend sagen, dass alle bisher etablierten seismischen/-akustischen Methoden entweder nicht die räumliche Auflösung zeigen um Objekte (0.5 - 5 m) zuverlässig abzubilden, oder eine zu geringe Signaleindringung in die Sedimente zeigen. Magnetische Methoden zur UXO-Detektion zeigen eine geringe Zuverlässigkeit und eine hohe Anfälligkeit für Falschdetektionen. Um eine Dopplung zu vermeiden sind im Folgenden nur alternative Datenverarbeitungsmöglichkeiten für seismische/akustische Daten zur Objektdetektion aufgezeigt.

Generell können für das Abbilden von Punktdiffraktionen anhand seismischer/akustischer Daten zwei Ansätze unterschieden werden: Entweder werden Filter während der Migration der Daten angewendet oder es wird ein Teil des Wellenfeldes aus dem Rohdatensatz extrahiert (Moser and Howard, 2008; Sturzu et al. 2014: "Diffraction imaging using specularity gathers"). Migrationsalgorithmen sind ein mögliches Verfahren zur Abbildung von Diffraktionen. Als Migration wird der Schritt in der seismischen Datenanalyse bezeichnet, der geneigte Reflektoren zu ihrer wahren Position im Untergrund verschiebt und Diffraktionen auf ihren Ursprung zurückprojiziert (Yilmaz, 1991: "Seismic data processing. Society of Exploration Geophysicists"). Dieser Schritt wird genutzt, um aus einer Abbildung des Wellenfeldes ein Abbild des Untergrundes zu generieren. Um mit Migrationsfiltern Diffraktionen abzubilden kann das Prinzip genutzt werden, dass Reflexionen nach einer Standardmigration lokal als ebene Flächen genähert werden können. Durch diese Näherung kann dann ein Filter zur Unterdrückung von Reflexionen bestimmt werden und in einem zweiten Migrationsdurchgang werden nach Anwendung des Filters nur Diffraktionen an ihrem Ursprungspunkt abgebildet (Sturzu et al., 2014). In diesem Zusammenhang sind der Öffnungswinkel der Migration und das zugrundeliegende Geschwindigkeitsmodell häufig wichtige Faktoren. Außerdem ist mit Migrationsalgorithmen meist keine Echtzeitverarbeitung möglich, da immer der komplette Datensatz vorliegen muss, um eine Migration durchzuführen. Zusätzlich erfordern Migrationsalgorithmen abhängig von der genauen angewandten Methodik einen relativ hohen Rechenaufwand.

Um Diffraktionen aus dem Wellenfeld zu extrahieren, werden zumeist eine Reihe von Datenverarbeitungsschritten kombiniert. Da Diffraktionen deutlich schwächer sind als Reflexionen zielen die Techniken meist darauf ab gezielt Reflexionen zu unterdrücken, sodass nach dieser Unterdrückung in den Datensätzen nur noch Diffraktionen und Rauschen enthalten sind. Die Reflexionsunterdrückung ist meist nicht perfekt, sodass zum Teil noch abgeschwächte Reflexionen in den Daten erhalten bleiben.

Ein weiterer Aspekt bei der Abbildung von Diffraktionen ist die Sortierung der Daten. Ziel der Sortierung ist es, alle Zeitreihen, die eine bestimmte Diffraktion enthalten und an den Empfängern aufgenommen worden sind, in einer Gruppe zu bündeln. Im Falle der Reflexionsseismik werden die Spuren gebündelt, deren Mittelpunkt zwischen Sender und Empfänger nahe beieinanderliegen. Dieser Mittelpunkt kann als Näherung als Reflexionspunkt angenommen werden. Oft wird diese Art der Sortierung auch für das Abbilden von Diffraktionen verwendet. Dieser Ansatz ist aber, unter statistischen Gesichtspunkten betrachtet, wenig sinnvoll. Da eine Diffraktion eine neue, sekundäre Quelle darstellt, können in zumindest manchen Ausführungsbeispielen alle Zeitreihen gebündelt werden, die innerhalb einer bestimmten Distanz zum Diffraktionsursprung liegen. Diese Distanz wird beispielsweise dadurch bestimmt, ob etwa die seismische Quelle den Punkt beleuchtet, das Signal-zu-Rausch- Verhältnis trotz Abschwächung des Signals mit zunehmender Distanz groß genug ist und die Aufzeichnungsdauer der Empfänger ausreicht. Dabei kann eine Spur mehrere Diffraktionen enthalten und somit auch verschiedenen Gruppen zugeordnet werden.

Der hier beschriebene Ansatz beruht darauf, dass bestimmte Objekte im Untergrund seismische Wellen, etwa in Form von kugelförmigen Wellen, zurückstreuen. Wenn die seismischen Wellen kontrolliert erzeugt und aufgezeichnet werden, können in einem explorativen Verfahren durch Laufzeitkorrekturen und statistische Auswertungen Lokationen ermittelt werden, an denen diese Objekte zu finden sind.

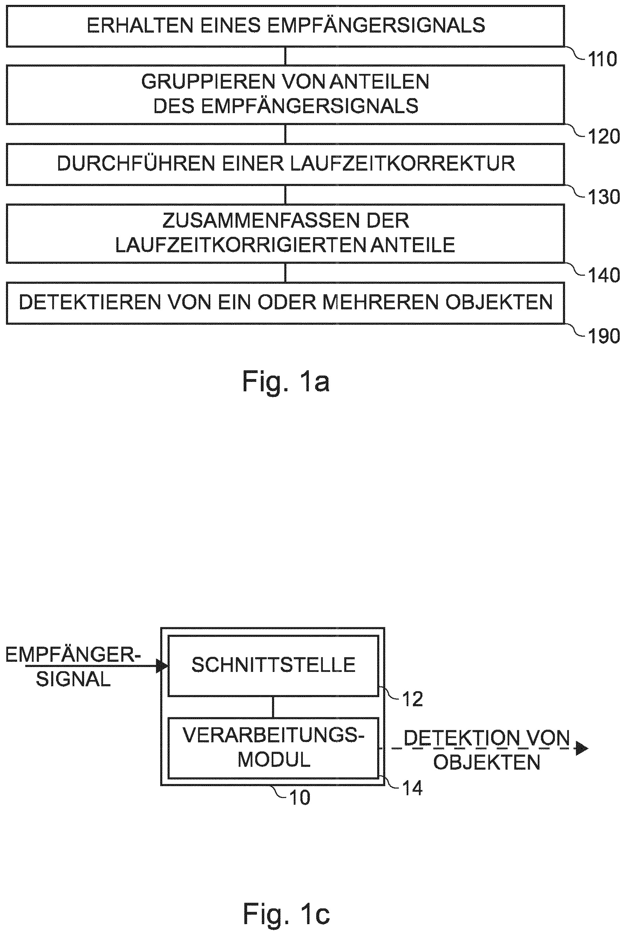

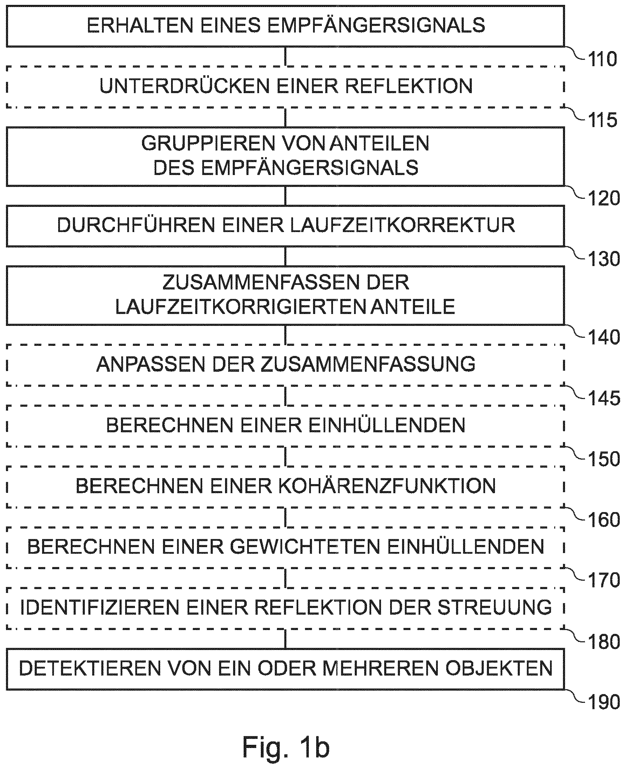

Fign. 1a und 1b zeigen Flussdiagramme von Ausführungsbeispielen eines Verfahrens zum Detektieren von ein oder mehreren Objekten im Meeresboden. Das Verfahren umfasst ein Erhalten 110 eines Empfängersignals. Das Empfängersignal basiert auf einer Streuung von mehreren akustischen Signalen an den ein oder mehreren Objekten im Meeresboden. Das Empfängersignal ist durch eine Mehrzahl von Empfängern generiert. Das Verfahren umfasst ferner ein Gruppieren 120 von Anteilen des Empfängersignals zu Punkten eines Detektionsrasters. Das Detektionsraster stellt ein Raster dar, an dessen Punkten die ein oder mehreren Objekte lokalisiert werden. Das Verfahren umfasst ferner ein Durchführen 130 einer Laufzeitkorrektur der Anteile des Empfängersignals in Bezug auf die Punkte des Detektionsrasters. Das Verfahren umfasst ferner ein Zusammenfassen 140 der laufzeitkorrigierten Anteile des Empfängersignals an den Punkten des Detektionsrasters. Das Verfahren umfasst ferner ein Detektieren 190 der ein oder mehreren Objekte an den Punkten des Detektionsrasters basierend auf der Zusammenfassung der laufzeitkorrigierten Anteile des Empfängersignals. Die Detektion der ein oder mehreren Objekte basiert auf der Streuung der mehreren akustischen Signale an den ein oder mehreren Objekten.

Fig. 1c zeigt ein Blockdiagramm eines Ausführungsbeispiels einer entsprechenden Vorrichtung 10 zum Detektieren von ein oder mehreren Objekten im Meeresboden. Die Vorrichtung 10 umfasst eine Schnittstelle 12 zum Erhalten eines Empfängersignals. Die Vorrichtung 10 umfasst ferner ein Verarbeitungsmodul 14, das mit der Schnittstelle 12 gekoppelt ist. Das Verarbeitungsmodul ist ausgebildet zum Ausführen des Verfahrens der Fign. 1a und/oder 1b. Beispielsweise ist das Verarbeitungsmodul ausgebildet zum Gruppieren der Anteile des Empfängersignals zu Punkten des Detektionsrasters. Das Verarbeitungsmodul ist ferner ausgebildet zum Durchführen der Laufzeitkorrektur der Anteile des Empfängersignals in Bezug auf die Punkte des Detektionsrasters. Das Verarbeitungsmodul ist ferner ausgebildet zum Zusammenfassen der laufzeitkorrigierten Anteile des Empfängersignals an den Punkten des Detektionsrasters. Das Verarbeitungsmodul ist ferner ausgebildet zum Detektieren der ein oder mehreren Objekte an den Punkten des Detektionsrasters basierend auf der Zusammenfassung der laufzeitkorrigierten Anteile des Empfängersignals.

Die folgende Beschreibung bezieht sich sowohl auf das Verfahren der Fign. 1a und/oder 1b als auch auf die entsprechende Vorrichtung 10 von Fig. 1c.

Ausführungsbeispiele der vorliegenden Offenbarung befassen sich mit einem Verfahren, einer Vorrichtung sowie einem Computerprogramm zum Detektieren von ein oder mehreren Objekten im Meeresboden. Dabei ist der Term "Meeresboden" im Rahmen der vorliegenden Offenbarung nicht als einschränkend auszulegen - Ausführungsbeispiele sind genauso dafür anwendbar, Objekte in einem Flussbett oder in dem Grund eines Sees oder eines anderen Gewässers aufzuspüren. Dementsprechend umfasst der Begriff "Meeresboden" im Lichte dieser Anmeldung auch allgemein den Boden von Gewässern, also auch "Flussbett", "Boden des Sees" oder "Seebett".

Dabei ist das System beispielsweise dazu vorgesehen, Objekte unterhalb des Meeresbodens oder Flussbetts zu detektieren, also etwa Objekte die sich etwa im Sediment des Meeresbodens befinden. Das System kann beispielsweise dazu ausgelegt sein, um die ein oder mehreren Objekte innerhalb von 10 m (oder innerhalb von 15 m, innerhalb von 20 m) unterhalb des Meeresbodens zu detektieren. Eine Detektionstiefe des Systems kann beispielsweise zumindest 10 m (oder zumindest 15 m, zumindest 20 m) in den Meeresboden hineinragen. Die ein oder mehreren Objekte können beispielswese (große, isolierte) Gesteinsbrocken sein, etwa Findlinge, die sich im Meeresboden befinden. In anderen Ausführungsbeispielen können die ein oder mehreren Objekte etwa Munition sein, die nicht explodiert ist, sog. UneXploded Ordnance (UXO, Blindgänger). Diese Objekte können etwa eine Gefahr darstellen, wenn Strukturen, wie etwa Windkraftwerke oder Bohrplattformen im Meeresboden auf Fundamenten gebaut werden sollen, die in den Meeresboden hineinragen. Um diese Objekte zu detektieren nutzen Ausführungsbeispiele, anders als andere Ansätze, nicht die Reflektionen, die von einer Signalquelle an den Objekten hervorgerufen werden, sondern die Streuung eines akustischen Signals an den j eweiligen Objekten. Um diese Streuungseffekte nutzen zu können ist die Wellenlänge des akustischen Signals, das für die Detektion genutzt wird, auf die Größe der Objekte abgestimmt, die detektiert werden sollen. Um eine Weitwinkelstreuung zu erhalten, auf der die Detektion basieren kann, kann die Wellenlänge des akustischen Signals in der gleichen Größenordnung sein, wie die Größe der Objekte selbst.

Das Verfahren umfasst das Erhalten 110 des Empfängersignals. In Ausführungsbeispielen wird das Empfängersignal durch eine Mehrzahl von Empfängern generiert. Die Empfänger der Mehrzahl von Empfängern können beispielsweise Hydrophone sein, also Mikrofone, die unter Wasser zum Aufnehmen oder Hören von Unterwasserschall verwendet werden können. Die Mehrzahl von Empfängern können beispielsweise ausgebildet sein, um eine Wellenfront, die durch Streuung (und optional auch Reflektion) der mehreren akustischen Signale an den ein oder mehreren Objekten (und optional auch an dem Meeresboden) entstanden ist, zu erfassen und basierend auf der erfassten Wellenfront das Empfängersignal zu generieren. So ist die Mehrzahl von Empfängern ausgebildet, um zumindest basierend auf einer Streuung der mehreren akustischen Signale an den ein oder mehreren Objekten das Empfängersignal zu generieren.

Häufig werden von Empfängern sowohl die Streuung als auch die Reflektion des akustischen Signals erfasst. In diesen Fällen können die Anteile, die auf der Streuung basieren, und die Anteile, die auf der Reflektion basieren, durch das Verarbeitungsmodul getrennt werden. In anderen Worten kann das Empfängersignal einen ersten Signalanteil umfassen, der auf der Streuung der mehreren akustischen Signale an den ein oder mehreren Objekten basiert. Das Empfängersignal kann einen zweiten Signalanteil umfassen, der auf einer Reflektion der mehreren akustischen Signale basiert. Das Verfahren kann ein Unterdrücken 115 des zweiten Signalanteils gegenüber dem ersten Signalanteil umfassen. Die anschließenden Verarbeitungsschritte, wie etwa das Gruppieren der Anteile des Empfängersignals, das Durchführen der Laufzeitkorrektur, das Zusammenfassen der laufzeitkorrigierten Anteile und/oder die Detektion der ein oder mehreren Objekte können beispielsweise (ausschließlich oder überwiegend) auf dem ersten Signalanteil basieren. In anderen Worten kann das Verfahren ein Unterdrücken 115, etwa ein Abschwächen um zumindest 50% der Empfangsleistung, in dem Empfängersignal, der Reflektion der mehreren akustischen Signale (etwa an dem Meeresboden) umfassen. Gute Ergebnisse werden mit einer Methodik erzielt, die auf einer Eigenwertzerlegung (Singular Value Decomposition: SVD; siehe Bansal und Imhof, 2016: "Diffraction enhancement in prestack seismic data") nach einer Laufzeitkorrektur für Reflexionen beruht. Nach der Eigenwertzerlegung wird die Laufzeitkorrektur zurückgerechnet, sodass die ursprünglichen Spuren ohne Reflexionen wiederhergestellt werden. Andere Vorgehensweisen zur Reflexionsunterdrückung sind denkbar und ändern nicht den weiteren Weg. In anderen Worten kann das Unterdrücken des zweiten Signalanteils, oder der Reflektionen, beispielsweise auf einer Eigenwertzerlegung einer laufzeitkorrigierten Fassung des Empfängersignals basieren.

Vorteilhaft für den hier beispielhaft aufgezeigten Lösungsweg ist in manchen Ausführungsbeispielen, dass das zurückgestreute Wellenfeld genügend dicht beprobt wird. Daher wird im Folgenden beispielhaft angenommen, dass die Lokationen, an denen die seismischen Wellen künstlich erzeugt (Schusslokationen) und aufgezeichnet (Empfängerlokationen) werden, sehr genau im Raum bekannt sind. Außerdem können die Zeitpunkte der Generierung der Wellen mit dem Beginn der einzelnen Aufzeichnungen synchronisiert werden. Ein Wellenfeld ist beispielsweise dann genügend dicht beprobt, wenn kein Aliasing in Raum und Zeit auftritt, also wenn jede Wellenlänge in Raum und Zeit mindestens zwei Mal beprobt wird.

Die Wellenlänge des akustischen Signals ist in zumindest manchen Ausführungsbeispielen an eine erwartete Größe der ein oder mehreren Objekte angepasst. Die erwartete Größe der ein oder mehreren Objekte kann beispielsweise ein Wert sein, der durch das Ziel der Detektion vorgegeben ist. Sollen etwa Findlinge gefunden werden, so kann eine andere Wellenlänge genutzt werden als in einem Fall, in dem Munition gefunden werden soll, oder etwa ein versunkenes Schiff. So kann die Wellenlänge der mehreren akustischen (oder seismischen) Signale im gleichen Bereich liegen wie die erwartete Größe der ein oder mehreren Objekte selbst. So kann die Wellenlänge der mehreren akustischen Signale zumindest 10% (oder zumindest 20%, zumindest 30%, zumindest 50%) der erwarteten Größe der ein oder mehreren Objekte entsprechen. Die Wellenlänge der akustischen Signale kann beispielsweise höchstens 1000% (oder höchstens 800%, höchstens 500%) der erwarteten Größe der ein oder mehreren Objekte entsprechen. Das vorliegende System und Verfahren kann in vielen Fällen genutzt werden, um eher größere Objekte, wie etwa Findlinge oder Blindgänger, zu detektieren. So kann die Wellenlänge der mehreren akustischen Signale etwa zumindest 50 cm (oder zumindest 80 cm, zumindest 100 cm, zumindest 150 cm) betragen. Dabei können die Wellenlängen der mehreren akustischen Signale beispielsweise substanziell gleich sein, d.h. sich weniger als 5% der Wellenlänge voneinander unterscheiden. Auch der Abstand zwischen benachbarten Empfängern der Mehrzahl von Empfängern kann von der Wellenlänge abhängig gemacht werden, etwa um Aliasing zu vermeiden. So kann beispielsweise ein Abstand zwischen benachbarten Empfängern der Mehrzahl von Empfängern höchstens so groß ist wie die Hälfte der Wellenlänge der mehreren akustischen Signale.

In einem explorativen Verfahren kann dann an allen Positionen, die die künstlich erzeugte seismische Welle erreicht, überprüft werden, ob sich an dieser Stelle ein Objekt mit den oben beschriebenen Eigenschaften befindet. Limitierende Faktoren sind dabei die Dämpfung des seismischen Signals mit zunehmender Laufzeit und die Abstrahlcharakteristik der Objekte. Um alle möglichen Lokationen von Punktdiffraktoren im Untersuchungsgebiet zu testen, kann ein Gitternetz (etwa das Detektionsraster) erzeugt werden in dem die Berechnungen an den akustischen Daten vorgenommen wird. Um den gängigen Konventionen zu folgen, werden die einzelnen Gitterpunkte (die Punkte des Detektionsrasters) als CFPs bezeichnet.

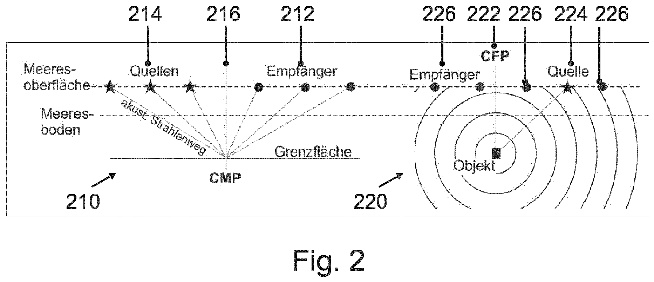

Fig. 2 zeigt ein schematisches Diagramm eines Common-Mid-Point (CMP, wörtlich "gemeinsamer Mittelpunkt") und Common-Fault-Point (CFP, wörtlich "gemeinsamer Störungspunkt") Sortierungsprinzips. Während in CMPs 210 Zeitreihen von Empfängern 212 zusammengefasst werden, deren Mittelpunkt 216 zwischen Quelle 214 und Empfänger 212 zusammenfallen, werden im Gegensatz dazu in CFPs 220 alle Zeitreihen gebündelt, die eine von einer Punktdiffraktionsquelle 222 ausgehende, sekundäre Kugelwelle enthalten (Bezugszeichen 224 zeigt die akustische Quelle, Bezugszeichen 226 zeigt die Empfänger.

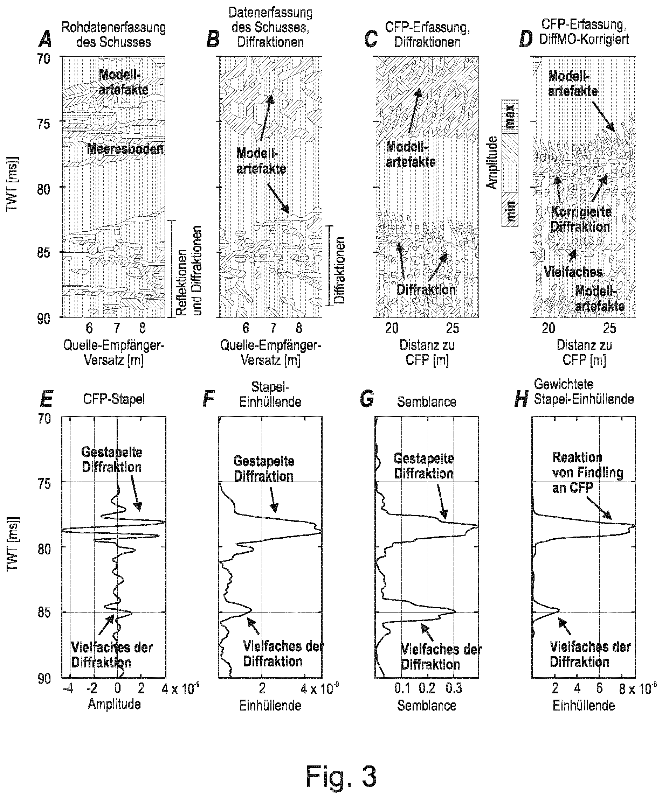

Im nächsten Schritt werden die CFPs systematisch überprüft. Die CFPs entsprechen dabei den Punkten des Detektionsrasters. Die nachfolgenden Schritte werden für jeden Punkt des Detektionsrasters ausgeführt. Beispielsweise wird an jedem der CFPs zumindest ein Teil der gleichen Folge an Schritten wiederholt, wie sie in Fig. 3a-3h gezeigt sind und im Folgenden eingehend beschrieben werden. In anderen Worten können die Schritte 120-190 für jeden Punkt des Detektionsrasters ausgeführt werden. So kann etwa das Gruppieren 120 der Anteile des Empfängersignals, das Durchführen der Laufzeitkorrektur, das Zusammenfassen der laufzeitkorrigierten Anteile und das Detektieren der ein oder mehreren Objekte (sowie die nachfolgend als optional beschriebenen Schritte) für jeden Punkt des Detektionsrasters (separat) ausgeführt werden. Dieses Vorgehen macht den Lösungsweg zu einem explorativen Verfahren. Wenn sich an der getesteten Lokation ein Objekt befindet, wird durch eine Laufzeitkorrektur der akustischen Aufnahmen ein kohärentes Signal generiert. Mit Hilfe dieses korrigierten und somit kohärenten Signals werden die ein oder mehreren Objekte detektiert. Befindet sich an der Lokation kein Objekt, wird durch die Laufzeitkorrektur auch kein kohärentes Signal erzeugt und es findet daher keine Detektion statt.

Im Folgenden werden anhand von schematischen Darstellungen die einzelnen Verarbeitungsschritte erläutert. Die Fign. 3a-3h zeigen eine Darstellung der Verarbeitungsschritte anhand von synthetischen Daten. Der Source-Receiver Offset (Quelle-Empfänger-Versatz) beschreibt den Abstand von Quelle und Empfänger, während die Distance to CFP (Abstand zu CFP) den Abstand eines Empfängers zu einem Common Fault Point angibt; Common Fault Points (d.h. die Punkte des Detektionsrasters) sind potentielle Positionen einer Quelle von Streuung.

In der ersten Darstellung der Reihe, Fig. 3a, wird das Empfängersignal dargestellt, das neben den Diffraktionen auch Reflexionen umfasst. Fig. 3a zeigt ein synthetisches Beispiel für Rohdaten (engl. "Raw shot gather"), in denen Reflexionen als Hyperbeläste zu erkennen sind. In Fig. 3a sind Modell-Artefakte 302, Reflexionen, die durch den Meeresboden verursacht werden 304 und eine weitere Gruppe von Reflexionen und Diffraktionen 306 zu erkennen. Im Normalfall sind Reflexionen, wie etwa die als "Seafloor" markierte Reflexion des Meeresbodens am deutlichsten sichtbar in marinen seismischen Datensätzen. In der Rohdatendarstellung aller aufgezeichneten Signale für einen Schuss stellen sich Reflexionen als Hyperbeläste dar. Diffraktionen sind in den Daten zwar enthalten, allerdings wegen ihrer schwachen Amplitude und der von Reflexionen verschiedenen Laufwege in dieser Darstellung nur schwer bis gar nicht sichtbar. Auf der x-Achse von Fig. 3a und Fig. 3b ist der Source-Receiver-Offset (in m) zu sehen, während auf der y-Achse der Fign. 3a bis 3h die TWT (Two-Way-Traveltime) in ms aufgetragen ist.

Fig. 3b illustriert eine relative Signalverstärkung der Diffraktionen in der Erfassung des akustischen Signals ("shot gather"). Diese Signalverstärkung lässt sich etwa durch Unterdrücken 115 der Reflektionen im Empfängersignal erreichen. Ziel dieses Schrittes ist es, die im Vergleich zu den Reflexionen schwachen Diffraktionen zu verstärken. Dazu werden die Reflexionen beispielsweise gezielt abgeschwächt. Dies ist möglich, da die Laufzeitkurven von Diffraktionen und Reflexionen unterschiedlich sind. In Fig. 3b sind, durch eine Abschwächung von Reflexionen das Rauschen und vor allem die Diffraktionen 312, die in der Darstellung gegen den Source-Receiver Offset einen chaotischen Eindruck machen, besser differenzierbar. Wie dargestellt sind Diffraktionen auch nach der Unterdrückung der Reflexionen in der Darstellung aller Aufzeichnungen für einen Schuss noch nicht eindeutig erkennbar. Bei starken Diffraktionen kann dieser Schritt auch übersprungen werden. Wiederum sind in Fig. 3b Modellartefakte 314 zu erkennen.

Anschließend werden die Anteile des Empfängersignals den Punkten des Detektionsrasters zugeordnet. Im Folgenden werden die Punkte des Detektionsrasters auch CFPs (Common-Fault-Points) bezeichnet. Fig. 3c illustriert eine Sortierung der vorhandenen, seismischen Daten (den Anteilen des Empfängersignals) in Common Fault Points (das Gruppieren der Anteile des Empfängersignals zu den Punkten des Detektionsrasters), wie sie etwa von Kanasewich and Phadke, 1988 in "Imaging discontinuities on seismic sections" durchgeführt wird. In der Darstellung der Signale gegen die Distanz der Empfänger zu einem CFP (x-Achse, auch in Fig. 3d) in Fig. 3c sind nun Diffraktionen 322 als Hyperbeläste zu erkennen. Auch in Fig. 3c sind Modellartefakte 324 zu sehen. Fig. 3c zeigt dabei die Diffraktionen in der CFP-Erfassung ("CFP gather").

Um eine statistische Auswertung zu ermöglichen und um eine bessere Darstellung zu erlauben, werden beispielsweise alle Schüsse und Empfänger in einem CFP zusammengefasst, die die Diffraktion eines Objekts an dieser Stelle enthalten würden. In anderen Worten kann das Empfängersignal Anteile von mehreren Empfängern und Anteile von mehreren Schüssen (akustischen Signalen) umfassen. Diese Anteile werden nun den Punkten des Rasters zugeordnet.

Dabei gibt es zumindest drei verschiedene Möglichkeiten der Zuordnung der akustischen Aufnahmen zu den CFPs. Die Sortierung bzw. Darstellung der Aufnahmen in der CFP-Zusammenfassung erfolgt nach Abstand des CFPs zum betreffenden Empfänger der Aufnahme. In anderen Worten können die Anteile des Empfängersignals basierend auf einer Distanz der Punkte des Detektionsrasters zu den Empfängern der Mehrzahl von Empfängern und zu der zumindest einer Signalquelle der mehreren akustischen Signale zu den Punkten des Detektionsrasters gruppiert werden.

Eine erste Möglichkeit stellt das sog. Real Aperture Processing (Verarbeitung anhand der realen Apertur) dar. In diesem Ansatz wird jeder Schuss wird einzeln prozessiert, d.h. die Anteile des Empfängersignals werden für jedes akustische Signal separat zu den Punkten des Detektionsrasters gruppiert. Dafür wird ausgehend von den Positionen der Empfänger und der Quelle das Detektionsraster (das als Gitternetz ausgebildet sein kann) von CFPs aufgespannt bis zu einem Maximalabstand zur Quelle, der von den Eigenschaften der eingesetzten Quelle abhängt (z.B. Öffnungswinkel). Die Spuren, d.h. die Aufnahmen aller Empfänger für einen Schuss der Quelle, des zu bearbeitenden Schusses werden jedem einzelnen CFP/Punkt des Detektionsrasters zugeordnet.

Alternativ kann beispielsweise Synthetic Aperture Processing genutzt werden, also die Verarbeitung mit Hilfe einer synthetischen Apertur. Bei der Nutzung einer synthetischen Apertur kann eine Anzahl von Empfängern in Bewegungsrichtung durch ein Aussenden mehrerer akustischer Signale synthetisch vergrößert werden. Folglich wird in diesem Ansatz eine festgelegte Anzahl von aufeinanderfolgenden Schüssen zusammengefasst. In anderen Worten werden die Anteile des Empfängersignals für eine vordefinierte Anzahl von Zeitpunkten in der vordefinierten zeitlichen Abfolge zusammengefasst zu den Punkten des Detektionsrasters gruppiert. Ausgehend von den Positionen von Empfängern und Schusspunkten wird ein CFP-Grid/Raster (Detektionsraster) aufgespannt. Die Spuren der zusammengefassten Schüsse werden jedem einzelnen CFP zugeordnet.

Alternativ können die Anteile des Empfängersignals rein aufgrund ihrer Distanz zu den Punkten des Detektionsrasters zugeordnet werden, d.h. alle Spuren innerhalb einer bestimmten Entfernung zu einem CFP werden diesem CFP zugeordnet. In anderen Worten können die Anteile des Empfängersignals für eine vordefinierte Distanz der Punkte des Detektionsrasters zu den Empfängern der Mehrzahl von Empfängern und zu der zumindest einen Signalquelle zu den Punkten des Detektionsrasters gruppiert werden. Die Entfernung/Distanz sollte so groß sein, dass sie einen Großteil des zu erwartenden Diffraktionshyperboloids einschließt. Wird diese Entfernung zu groß gewählt, sinkt die Signalqualität. Eine nutzbare Entfernung kann anhand der Rohdaten bzw. nach der Signalverstärkung der Diffraktionen abgeschätzt werden, indem die Größe der enthaltenen Diffraktionshyperboloide gemessen wird.

Anschließend wird für die zugeordneten Anteile des Empfängersignals die Laufzeitkorrektur in Bezug auf die Punkte des Detektionsrasters durchgeführt, d.h. eine Positionierung der Empfänger und der Signalquelle zu dem Punkt des Detektionsrasters wird einbezogen, um zu erreichen, dass unterschiedliche Distanzen der Empfänger und des Empfängers zu dem jeweiligen Punkt in der Kombination der Anteile des Empfängersignals ausgeglichen werden. Fig. 3d illustriert die Laufzeitkorrektur des Empfängersignals. Durch eine geeignete Laufzeitkorrektur werden die Diffraktionen, wie in Fig. 3d zu sehen ist, zu einem kohärenten, seismischen Ereignis. Ziel der Laufzeitkorrektur ist es das Diffraktionssignal eines Objektes am Ort des CFPs so zu korrigieren, dass es in allen Spuren zur gleichen Zeit auftritt.

Dabei zeigt Bezugszeichen 332 die laufzeitkorrigierte Diffraktion, Bezugszeichen 334 zeigt ein Vielfaches der Diffraktion, und Bezugszeichen 336 zeigt Modellartefakte. Fig. 3d zeigt dabei die laufzeitkorrigierten Diffraktionen in der CFP-Erfassung ("CFP gather, Diffraction Move Out (DiffMO)").

Dabei können verschiedene Laufzeitkorrekturansätze verfolgt werden. Beispielsweise kann eine Laufzeitkorrektur bei konstanten Geschwindigkeiten genutzt werden, d.h. für die Laufzeitkorrektur kann eine konstante seismische Geschwindigkeit angenommen werden. Dies ermöglicht eine verbesserte Laufzeitkorrekturgleichung zweiter Ordnung wenn eine konstante Geschwindigkeit angenommen werden kann:

Die hier beschriebene Laufzeitkorrektur bei konstanten Geschwindigkeiten basiert auf einer Laufzeitberechnung zweiter Ordnung für eine Punktdiffraktion (e.g., Yilmaz 1991: "Seismic data processing"; Sheriff and Geldart 1995; Clearbout 2010). Die Korrektur hängt von der räumlichen Lage der Quelle der Diffraktion $D = (x_d, y_d, z_d)$, des Empfängers $R = (x_r, y_r, z_r)$, der Quelle $S = (x_s, y_s, z_s)$ und der Root- Mean-Square (Quadratischer Mittelwert) Geschwindigkeit $v_{rms}$ ab:

Gleichung 5:

$$TWT_d = \frac{\sqrt{(x_d - x_s)^2 + (y_d - y_s)^2 + (z_d - z_s)^2}}{v_{rms}} + \frac{\sqrt{(x_d - x_r)^2 + (y_d - y_r)^2 + (z_d - z_r)^2}}{v_{rms}}$$

Gleichung 5 kann vereinfacht werden, basierend auf der Annahme, dass Quelle und Empfänger sich an der Meeresoberfläche befinden. Damit können sowohl $z_r$ als auch $z_s$ gleich null gesetzt werden. Außerdem werden die Positionen von Quelle und Empfänger auf ihren Abstand zu einem CFP reduziert

Gleichung 6:

$$d_{s,r} = \sqrt{(x_d - x_{s,r})^2 + (y_d - y_{s,r})^2}$$

Daraus resultiert folgende, vereinfachte Laufzeitgleichung:

Gleichung 7:

$$TWT_d = \sqrt{\frac{d_s^2}{v_{rms}^2} + \frac{z_d^2}{v_{rms}^2}} + \sqrt{\frac{d_r^2}{v_{rms}^2} + \frac{z_d^2}{v_{rms}^2}}$$

In Gleichung 7 ist die vertikale Laufzeit in folgender Form enthalten:

Gleichung 8:

$$TWT_{d,0} = \frac{2z_d}{v_{rms}}$$

Diese vertikale Laufzeit ist für einen Punktdiffraktor in einem CFP konstant und somit kann eine DiffMO-Korrektur von Gleichung 7 abgeleitet werden:

Gleichung 9:

$$TWT_{d,0}(TWT_d, d_s, d_r) = \frac{\sqrt{\frac{(d_s^2 + d_r^2)^2}{v_{rms}^4} - \frac{2TWT_d^2(d_s^2 + d_r^2)}{v_{rms}^2} + TWT_d^4}}{TWT_d}$$

Wie in Fig. 3d zu sehen ist, korrigiert diese Gleichung eine Diffraktion in einem CFP zu einem horizontalen und somit kohärenten Ereignis.

Alternativ kann beispielsweise eine Radon-Transformation bei unbekannten Geschwindigkeiten genutzt werden. Eine der wichtigsten Variablen für die zuvor beschriebene Laufzeitkorrektur ist die angenommene durchschnittliche seismische Geschwindigkeit. Wenn diese nicht bekannt ist, kann die Laufzeitkorrektur alternativ für eine Spanne von möglichen Geschwindigkeiten durchgeführt werden. In anderen Worten kann die Laufzeitkorrektur für eine Spanne von möglichen seismischen Geschwindigkeiten durchgeführt werden.

Wenn eine Diffraktion in den Daten des bearbeiteten CFPs enthalten ist, zeigt das gestapelte Signal an dem Ort und mit der passendsten Durchschnittsgeschwindigkeit ein Maximum. So kann beispielsweise eine seismische Geschwindigkeit aus der Spanne von möglichen seismischen Geschwindigkeiten basierend auf einer Größe eines lokalen Maximums in der entsprechenden Zusammenfassung der laufzeitkorrigierten Anteile des Empfängersignals für die Laufzeitkorrektur ausgewählt werden. Durch dieses Vorgehen können Positionen von Streukörpern und Durchschnittsgeschwindigkeiten ermittelt werden. Diese Methodik stellt eine Radon Transformation dar, da vom Signaldatenraum in einen Geschwindigkeitsdatenraum transformiert wird.

Alternativ kann eine Laufzeitkorrektur bei bekannten Geschwindigkeiten verwendet werden. In den meisten Fällen kann nicht angenommen werden, dass die seismische Geschwindigkeit $v_{rms}$ mit zunehmender Laufzeit konstant bleibt, z.B. wegen kompaktierten Sedimenten, die eine erhöhte seismische Geschwindigkeit aufweisen. Vielmehr kann angenommen werden, dass diese Geschwindigkeit eine Funktion der Laufzeit ist: $v_{rms}(TWT)$. Der oben beschriebenen Nomenklatur folgend, kann nach Guigné et al. (2014) eine Laufzeitkurve für Diffraktionen auch mithilfe der folgenden Gleichung beschrieben werden:

Gleichung 10:

$$TWT_d = 0.5\sqrt{TWT^2(d_s^2)} + 0.5\sqrt{TWT^2(d_r^2)}$$

Die Terme $TWT^2(d_s^2)$ bzw. $TWT^2(d_r^2)$ beschreiben dabei separat die Laufzeiten von der Quelle und von den Empfängern zum jeweils zu bearbeitenden CFP. Diese Laufzeitgleichungen können als Gleichung abhängig von $v_{rms}$ (*TWT*) formuliert werden (siehe beispielsweise Yilmaz, 1991). Folglich können für die Laufzeitkorrektur auf die Punkte des Detektionsrasters abgestimmte seismische Geschwindigkeiten für verschiedene Materialschichten zwischen der Mehrzahl von Empfängern und den Punkten des Detektionsrasters verwendet werden.

Nach der Laufzeitkorrektur werden die Spuren innerhalb der CFPs (d.h. an jedem Punkt des Detektionsrasters separat) summiert (zusammengefasst) und beispielsweise die Anzahl der Spuren geteilt. Es entsteht eine einzelne Summenspur, die der Zusammenfassung der Anteile des Empfängersignals entsprechen kann, in der die Amplitude gegen die Laufzeit aufgetragen ist. Werden die laufzeitkorrigierten Spuren, wie in Fig. 3e gezeigt, nun aufgestapelt, ergibt sich eine klar erkennbare Signalverstärkung zur Zeit des kohärenten Ereignisses (als gestapelte Diffraktion, Bezugszeichen 342). Folglich kann die Detektion der ein oder mehreren Objekte bereits auf der Zusammenfassung der Anteile des Empfängersignals (also ohne Einbeziehung weiterer Verfahrensschritte) durchgeführt werden, d.h. die ein oder mehreren Objekte können basierend auf einer Amplitude der Zusammenfassung der laufzeitkorrigierten Anteile des Empfängersignals detektiert werden. Die in Fig. 3e-h gezeigte Laufzeit (TWT) entspricht der vertikalen Laufzeit, daher kann bei vorhandenem Geschwindigkeitsmodell eine Umrechnung in Tiefe erfolgen. Dieser Schritt stellt eine erste statistische Auswertung dar und hat beispielsweise den Zweck Rauschen zu unterdrücken und das Signal zu verstärken. Hierbei werden alle Signale, die keine Diffraktionen sind, als Rauschen bezeichnet. Die einzelnen Spuren können zusätzlich skaliert werden, um den Energieverlust durch die räumliche Ausbreitung des Signals zu kompensieren (Spherical Divergence Correction, Sphärische Divergenzkorrektur). In anderen Worten kann das Verfahren, wie in Fig. 1b gezeigt, ein Anpassen 145 der Zusammenfassung der laufzeitkorrigierten Anteile des Empfängersignals, um eine Signalverstärkung von Signalanteilen zu erreichen, die auf der Streuung der mehreren akustischen Signale an weiter entfernten Objekten der ein oder mehreren Objekte basieren umfassen (etwa durch Nutzung der sphärischen Divergenzkorrektur). Bezugszeichen 344 zeigt ein Vielfaches der Diffraktion, das etwa durch eine Reflektion der Diffraktion hervorgerufen sein kann. In Fig. 3e wird auf der x-Achse die Amplitude des gestapelten Signals aufgetragen, von -4 bis +4 x $10^{-9}$.

Um die Interpretierbarkeit der Zusammenfassung der laufzeitkorrigierten Anteile des Empfängersignals zu verbessern, kann eine sog. Einhüllende der Zusammenfassung der laufzeitkorrigierten Anteile des Empfängersignals berechnet werden. In anderen Worten kann das Verfahren, optional, ein Berechnen 150 einer der der Amplitude der Zusammenfassung der laufzeitkorrigierten Anteile des Empfängersignals. Die ein oder mehreren Objekte können basierend auf der Einhüllenden detektiert werden. Fig. 3f illustriert die optionale Berechnung der Einhüllenden des gestapelten Signals. Durch die optionale Berechnung der Einhüllenden (engl "stack envelope"), wie in Fig. 3f gezeigt, wird die Darstellung der Amplitude des Stapels zu einem einzelnen Maximum 352 vereinfacht. Eine Auswertung des Signals mit der Phaseninformation ist möglich und kann auch weitere Informationen über den abgebildeten Punktdiffraktor enthalten. Auch in Fig. 3f ist das Vielfache 354 der Diffraktion sichtbar. In Fig. 3f wird auf der x-Achse die Einhüllende aufgetragen, auf einer Skala von 0 bis ca. 4.5 x $10^{-9}$.

Zusätzlich kann optional eine Kohärenzfunktion über die Zusammenfassung der laufzeitkorrigierten Anteile des Empfängersignals berechnet 160 werden, etwa eine sog. Semblance. In Fig. 3g wird optional die Semblance/Kohärenz (ein Ähnlichkeits- oder Kohärenzmaß) als Maß der Kohärenz aus Fig. 3d (den laufzeitkorrigierten Signalen) berechnet. Die Semblance, d.h. die Ähnlichkeit der Spuren innerhalb eines CFPs über ein definiertes Zeitfenster, ist ein Maß für die Kohärenz der laufzeitkorrigierten Signale. In anderen Worten kann die Kohärenzfunktion auf einer Ähnlichkeit zwischen zeitlich aufeinanderfolgenden Anteilen des Empfängersignals basieren. Die Kohärenzfunktion kann beispielsweise auf einer Semblance-Analyse basieren. Die Nutzung anderer Koeffizienten z.B. Korrelationskoeffizienten ist denkbar und ändert nichts am generellen Lösungsweg. Die ein oder mehreren Objekte können basierend auf der Kohärenzfunktion detektiert werden. Bezugszeichen 362 weist auf die des akustischen Signals an der Diffraktion hin, und Bezugszeichen 364 auf das Vielfache der Diffraktion. In Fig. 3g wird auf der x-Achse die Semblance eingetragen (von 0 bis 0.4).

Multipliziert man (optional) das gewählte Maß der Kohärenz (etwa die Semblance) mit der Einhüllenden des Stacks (sog. Wichtung des Signals), wie in Fig. 3h gezeigt ist, werden Artefakte abgeschwächt und die Auflösung wird erhöht, Diffraktionen (Bezugszeichen 372) können nun leicht identifiziert werden und auch einfach von der Vielfachen 374 der Diffraktion unterschieden werden. In anderen Worten kann das Verfahren ein Berechnen 170 einer gewichteten Einhüllenden basierend auf der Einhüllenden und basierend auf der Kohärenzfunktion, etwa durch Multiplizieren der Einhüllenden und der Kohärenzfunktion. Die Wichtung hat eine Verbesserung der Auflösung und Aussagekraft zur Folge. Die Detektion der ein oder mehreren Objekte kann beispielsweise auf der gewichteten Einhüllenden basieren. Dieser Schritt ist jedoch für den Lösungsweg nicht zwingend erforderlich.

In manchen Ausführungsbeispielen kann das Verfahren ferner ein Identifizieren 180 einer Reflektion der Streuung des akustischen Signals an den ein oder mehreren Objekten umfassen, etwa indem alle weiteren Maxima neben einem Hauptmaximum entfernt werden. Die Reflektion der Streuung des akustischen Signals an den ein oder mehreren Objekten kann in der Detektion der ein oder mehreren Objekte außer Betracht gelassen werden, entweder in der Detektion oder durch Anpassen der Zusammenfassung der laufzeitkorrigierten Anteile des Empfängersignals.

Das Verfahren umfasst ferner das Detektieren 190 der ein oder mehreren Objekte an den Punkten des Detektionsrasters basierend auf der Zusammenfassung der laufzeitkorrigierten Anteile des Empfängersignals. Beispielsweise kann ein Objekt der ein oder mehreren Objekte detektiert werden, wenn die Amplitude der Zusammenfassung der laufzeitkorrigierten Anteile des Empfängersignal, die Einhüllende der Amplitude der Zusammenfassung der laufzeitkorrigierten Anteile des Empfängersignals, oder die gewichtete Einhüllende einen Schwellenwert übersteigt, etwa falls das entsprechende Maximum der Amplitude der Zusammenfassung der laufzeitkorrigierten Anteile des Empfängersignal, der Einhüllenden der Amplitude der Zusammenfassung der laufzeitkorrigierten Anteile des Empfängersignals, oder der gewichteten Einhüllenden mit einer Position des Punkts des Detektionsrasters übereinstimmt und/oder auf ein kohärentes Signal hindeutet. Beispielsweise kann das Verfahren ein Bestimmen eines Untergrundmodells basierend auf den detektierten ein oder mehreren Objekten umfassen.

Die Detektion der ein oder mehreren Objekte basiert (ausschließlich) auf der Streuung der mehreren akustischen Signale an den ein oder mehreren Objekten, d.h. die Reflektion des akustischen Signals kann beispielsweise in der Detektion der ein oder mehreren Objekte unbeachtet oder unberücksichtigt bleiben.

Das beschriebene Datenverarbeitungsverfahren hat den großen Vorteil, dass durch dieses Verfahren ausschließlich Punktdiffraktionen mit zum Teil sehr guter Auflösung abgebildet werden können und eine Echtzeitdatenverarbeitung möglich ist.

Alle Teile des Wellenfeldes außer Punktdiffraktionen werden in manchen Ausführungsbeispielen als Rauschen betrachtet und so weit wie möglich unterdrückt. Die beschriebene relative Signalverstärkung der Diffraktionen bewirkt zunächst eine starke Unterdrückung der Reflexionen, die einen dominierenden Teil des Wellenfeldes ausmachen. Die folgende Laufzeitkorrektur korrigiert in manchen Ausführungsbeispielen (nur) Punktdiffraktionen zu kohärenten Ereignissen. Dadurch werden (nur) Punktdiffraktionen durch die anschließende Stapelung verstärkt. Die optionale Wichtung der gestapelten Daten mit der Semblance stellt eine zusätzliche Rauschunterdrückung dar und ermöglicht eine verbesserte Interpretation der Resultate. In einem Gitternetz an CFPs über dem Untersuchungsgebiet zeigen sich (nur) an den Stellen und in den Tiefen, an denen Punktdiffraktionen zu finden sind, relative Maxima. Damit kann die räumliche Lage einer Vielzahl von vorhandenen Punktdiffraktoren ermittelt werden. Da eine große Anzahl an Datenspuren in jedem CFP für die Auswertung verwendet wird, können statistisch signifikante Aussagen getroffen werden.

Es wird in zumindest manchen Ausführungsbeispielen eine sehr feine Auflösung erreicht, da beim Sortieren Spuren aus einem großen Bereich um die CFPs verwendet werden. Dabei kann beispielsweise in der vorangegangenen Aufnahme der Daten eine möglichst gute Überdeckung des Untersuchungsgebiets gewährleistet werden und ein Aliasing der Daten im Raum vermieden werden. Die räumliche Ausdehnung der Quellen- und Empfängerpositionen während der Datenaufnahme kann dabei definieren wie fein die erreichbare räumliche Auflösung wird. Je größer die Ausdehnung, desto kleiner wird die Distanz, ab der zwei nah beieinander liegende Punktdiffraktionen unterschieden werden können.

Eine Echtzeitdatenverarbeitung ist in zumindest manchen Ausführungsbeispielen möglich, da die Unterdrückung der Reflexionen auf einzelne Schüsse und das Synthetic Aperture Processing auf nacheinander aufgezeichnete Schüsse angewendet wird. Somit kann dieses Verfahren in diesen Fällen schon während der Datenaufzeichnung Ergebnisse liefern die für die Auswertung genutzt werden können.

Im Gegensatz zu Techniken, die auf einer Migration beruhen, ist die hier beschriebene Offenbarung wenig anfällig für Fehler im angenommenen Geschwindigkeitsfeld. Bei der Unterdrückung der Reflexionen wird die Laufzeitkorrektur für Reflexionen vorwärts und invers angewendet, sodass das hier angenommene Geschwindigkeitsfeld die Spuren nicht verzerrt. Bei Tests hat sich gezeigt, dass die Laufzeitkorrektur für die Diffraktionen wenig anfällig für Fehler im Geschwindigkeitsfeld ist. Fehler resultierend aus einen fehlerhaften Geschwindigkeitsfeld zeigen sich in der Genauigkeit der Lokalisierung der Objekte, allerdings wird die Fähigkeit der Methode zur Detektion von Punktdiffraktoren nicht signifikant beeinflusst. Zusätzlich sind Migrationsalgorithmen im Vergleich deutlich rechenaufwändiger.

Ausführungsbeispiele schaffen eine Kombination von CFP-Sortierung und Synthetic Aperture Processing zur Lokalisierung von Punktdiffraktoren, die so noch nicht bekannt ist. Punktdiffraktoren in marinen Sedimenten können verschiedene Arten von Objekten sein, z.B. glaziale Findlinge, andere geologische Inhomogenitäten, oder UXOs.

Die Technik ist auch für geowissenschaftliche Studien von Interesse. Durch die hier beschriebene Methodik können z.B. Austrittsstellen von Fluiden, Störungsflächen im Untergrund und Konkretionen abgebildet und analysiert werden.

Ausführungsbeispiele können beispielsweise mit einem spezifischen System aus Signalquelle und einer Mehrzahl von Empfängern genutzt werden. Die Mehrzahl von Empfängen beispielsweise über eine Fläche verteilt sein. Diese Fläche bildet die Apertur der Mehrzahl von Empfängern, d.h. je größer die Fläche ist, desto größer ist auch die Apertur der Mehrzahl von Empfängern. Somit können die Empfänger der Mehrzahl von Empfängern in einem regelmäßigen oder unregelmäßigen Raster angeordnet sein, das die Apertur der Mehrzahl von Empfängern bildet. Das Verfahren (bzw. das Verarbeitungsmodul) kann basierend auf der Streuung des akustischen Signals an den ein oder mehreren Objekten die ein oder mehreren Objekte sowohl unterhalb des Rasters (der Fläche, der Apertur) als auch versetzt zu dem Raster detektieren, etwa zumindest 10° versetzt (oder zumindest 20° versetzt, zumindest 30° versetzt, zumindest 45° versetzt). Bei einer großen Apertur kann der Winkel mehr als 45° betragen.

Das akustische Signal kann beispielsweise von zumindest einer Signalquelle generiert sein. Die zumindest eine Signalquelle kann dabei an verschiedenen Positionen angeordnet sein, etwa innerhalb oder außerhalb der Fläche, an der die Mehrzahl von Empfängern angeordnet ist. Die zumindest eine Signalquelle kann dabei eine akustische und/oder seismische Signalquelle sein, etwa eine GI-Gun (Generator-Injector-Gun, Generator-Injektor-Kanone), ein Sparker (Schallquelle mit elektrischer Entladung), oder ein Boomer (Schallquelle, die die Energie in Kondensatoren speichert und über eine flache spiralförmige Spule abgibt, so dass Wasser durch eine benachbart angeordnete Kupferplatte verdrängt wird). Die Begriffe akustisch und seismisch können hier austauschbar verwendet werden, da im vorliegenden Ansatz Wellenlängen verwendet werden, die sowohl akustischen als auch seismischen Signalen zugeordnet werden können.

Die zumindest eine Signalquelle und die Mehrzahl von Empfängern können beispielsweise dazu vorgesehen sein, von einem Schiff entlang einer Wasseroberfläche oberhalb des Meeresbodens gezogen zu werden. Das Detektionsraster kann beispielsweise ein zweidimensionales Detektionsraster sein. Das zweidimensionale Detektionsraster kann entlang einer Fahrtrichtung des Schiffs und entlang einer Tiefenachse zwischen der zumindest einen Signalquelle und/oder der Mehrzahl von Empfängern und dem Meeresboden aufgespannt sein. alternativ kann das Detektionsraster ein dreidimensionales Detektionsraster sein, das Entlang der Fahrtrichtung des Schiffes, Orthogonal zur Fahrtrichtung des Schiffes und entlang der Tiefenachse zwischen der zumindest einen Signalquelle und/oder der Mehrzahl von Empfängern und dem Meeresboden aufgespannt ist.

Die Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

In Ausführungsbeispielen kann das Verarbeitungsmodul 14 einem beliebigen Controller oder Prozessor oder einer programmierbaren Hardwarekomponente entsprechen. Beispielsweise kann das Verarbeitungsmodul 14 auch als Software realisiert sein, die für eine entsprechende Hardwarekomponente programmiert ist. Insofern kann das Verarbeitungsmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Verarbeitungsmoduls 14 denkbar.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

**Patentansprüche**

1. Verfahren zum Detektieren von ein oder mehreren Objekten im Meeresboden, das Verfahren umfassend:

   Erhalten (110) eines Empfängersignals, wobei das Empfängersignal auf einer Streuung von mehreren akustischen Signalen an den ein oder mehreren Objekten im Meeresboden basiert, wobei das Empfängersignal durch eine Mehrzahl von Empfängern generiert ist;
   Gruppieren (120) von Anteilen des Empfängersignals zu Punkten eines Detektionsrasters, wobei das Detektionsraster ein Raster darstellt, an dessen Punkten die ein oder mehreren Objekte lokalisiert werden;
   Durchführen (130) einer Laufzeitkorrektur der Anteile des Empfängersignals in Bezug auf die Punkte des Detektionsrasters;
   Zusammenfassen (140) der laufzeitkorrigierten Anteile des Empfängersignals an den Punkten des Detektionsrasters;
   Berechnen (150) einer Einhüllenden einer Amplitude der Zusammenfassung der laufzeitkorrigierten Anteile des Empfängersignals; und
   Detektieren (190) der ein oder mehreren Objekte an den Punkten des Detektionsrasters
   basierend auf der Einhüllenden der Amplitude der Zusammenfassung der laufzeitkorrigierten Anteile des Empfängersignals, wobei die Detektion der ein oder mehreren Objekte auf der Streuung der mehreren akustischen Signale an den ein oder mehreren Objekten basiert.

2. Das Verfahren gemäß Anspruch 1, ferner umfassend Berechnen (160) eines Kohärenzfunktion basierend auf der Zusammenfassung der laufzeitkorrigierten Anteile des Empfängersignals, wobei die Kohärenzfunktion auf einer Ähnlichkeit zwischen zeitlich aufeinanderfolgenden Anteilen des Empfängersignals basiert, wobei die ein oder mehreren Objekte basierend auf der Kohärenzfunktion detektiert werden.

3. Das Verfahren gemäß Anspruch 2, ferner umfassend Berechnen (170) einer gewichteten Einhüllenden basierend auf der Einhüllenden und basierend auf der Kohärenzfunktion.

4. Das Verfahren gemäß einem der Ansprüche 2 oder 3, wobei die Kohärenzfunktion auf einer Semblance-Analyse basiert.

5. Das Verfahren gemäß einem der Ansprüche 1 bis 4, ferner umfassend Anpassen (145) der Zusammenfassung der laufzeitkorrigierten Anteile des Empfängersignals, um eine Signalverstärkung von Signalanteilen zu erreichen, die auf der Streuung der mehreren akustischen Signale an weiter entfernten Objekten der ein oder mehreren Objekte basieren.

6. Das Verfahren gemäß einem der Ansprüche 1 bis 5, ferner umfassend Identifizieren (180) einer Reflektion der Streuung des akustischen Signals an den ein oder mehreren Objekten, wobei die Reflektion der Streuung des akustischen Signals an den ein oder mehreren Objekten in der Detektion der ein oder mehreren Objekte außer Betracht gelassen wird.

7. Das Verfahren gemäß einem der Ansprüche 1 bis 6, wobei die Laufzeitkorrektur für eine Spanne von möglichen seismischen Geschwindigkeiten durchgeführt wird, wobei eine seismische Geschwindigkeit aus der Spanne von möglichen seismischen Geschwindigkeiten basierend auf einer Größe eines lokalen Maximums in der entsprechenden Zusammenfassung der laufzeitkorrigierten Anteile des Empfängersignals für die Laufzeitkorrektur ausgewählt wird,

oder wobei für die Laufzeitkorrektur auf die Punkte des Detektionsrasters abgestimmte seismische Geschwindigkeiten für verschiedene Materialschichten zwischen der Mehrzahl von Empfängern und den Punkten des Detektionsrasters verwendet werden,
oder wobei für die Laufzeitkorrektur eine konstante seismische Geschwindigkeit angenommen wird.

8. Das Verfahren gemäß einem der Ansprüche 1 bis 7, wobei die Anteile des Empfängersignals basierend auf einer Distanz der Punkte des Detektionsrasters zu den Empfängern der Mehrzahl von Empfängern und zu zumindest einer Signalquelle der mehreren akustischen Signale zu den Punkten des Detektionsrasters gruppiert werden.

9. Das Verfahren gemäß Anspruch 8, wobei die Anteile des Empfängersignals für jedes akustische Signal separat zu den Punkten des Detektionsrasters gruppiert werden.

10. Das Verfahren gemäß Anspruch 8, wobei die Anteile des Empfängersignals für eine vordefinierte Anzahl von Zeitpunkten in der vordefinierten zeitlichen Abfolge zusammengefasst zu den Punkten des Detektionsrasters gruppiert werden.

11. Das Verfahren gemäß Anspruch 8, wobei die Anteile des Empfängersignals für eine vordefinierte Distanz der Punkte des Detektionsrasters zu den Empfängern der Mehrzahl von Empfängern und zu der zumindest einen Signalquelle zu den Punkten des Detektionsrasters gruppiert werden.

12. Programm mit einem Programmcode zum Durchführen des Verfahrens gemäß einem der vorhergehenden Ansprüche wenn der Programmcode auf einem Computer, einem Prozessor, einem Kontrollmodul oder einer programmierbaren Hardwarekomponente ausgeführt wird.

13. Vorrichtung (10) zum Detektieren von ein oder mehreren Objekten im Meeresboden, die Vorrichtung umfassend:

eine Schnittstelle (12) zum Erhalten eines Empfängersignals, wobei das Empfängersignal auf einer Streuung von mehreren akustischen Signalen an den ein oder mehreren Objekten im Meeresboden basiert, wobei das Empfängersignal durch eine Mehrzahl von Empfängern generiert ist; und
ein Verarbeitungsmodul (14), ausgebildet zum:

Gruppieren von Anteilen des Empfängersignals zu Punkten eines Detektionsrasters, wobei das Detektionsraster ein Raster darstellt, an dessen Punkten die ein oder mehreren Objekte lokalisiert werden,
Durchführen einer Laufzeitkorrektur der Anteile des Empfängersignals in Bezug auf die Punkte des Detektionsrasters,
Zusammenfassen der laufzeitkorrigierten Anteile des Empfängersignals an den Punkten des Detektionsrasters,
Berechnen einer Einhüllenden einer Amplitude der Zusammenfassung der laufzeitkorrigierten Anteile des Empfängersignals, und
Detektieren der ein oder mehreren Objekte an den Punkten des Detektionsrasters basierend auf der Einhüllenden der Amplitude der der Zusammenfassung der laufzeitkorrigierten Anteile des Empfängersignals, wobei die Detektion der ein oder mehreren Objekte auf der Streuung der mehreren akustischen Signale an den ein oder mehreren Objekten basiert.

**Claims**

1. A method for detecting one or more objects in the seabed, the method comprising:

obtaining (110) a receiver signal, the receiver signal being based on a scattering of a plurality of acoustic signals at the one or more objects in the seabed, the receiver signal being generated by a plurality of receivers;
grouping (120) portions of the receiver signal into points of a detection grid, the detection grid representing a grid at which points the one or more objects are located;
performing (130) a propagation time correction of the portions of the receiver signal with respect to the points of the detection grid;
aggregating (140) the propagation time-corrected portions of the receiver signal at the points of the detection grid;
calculating (150) an envelope of an amplitude of the aggregation of the propagation time-corrected portions of the receiver signal; and

detecting (190) the one or more objects at the points of the detection grid based on the envelope of the amplitude of the aggregation of the propagation time-corrected portions of the receiver signal, wherein the detection of the one or more objects is based on the scattering of the plurality of acoustic signals at the one or more objects.

2. The method of claim 1, further comprising calculating (160) a coherence function based on the aggregation of the propagation time-corrected portions of the receiver signal, wherein the coherence function is based on a similarity between temporally consecutive portions of the receiver signal, wherein the one or more objects are detected based on the coherence function.

3. The method of claim 2, further comprising calculating (170) a weighted envelope based on the envelope and based on the coherence function.

4. The method of any of claims 2 or 3, wherein the coherence function is based on a semblance analysis.

5. The method of any of claims 1 to 4, further comprising adjusting (145) the aggregation of the propagation time-corrected portions of the receiver signal to achieve a signal gain of signal portions based on the scattering of the plurality of acoustic signals at more distant objects of the one or more objects.

6. The method of any of claims 1 to 5, further comprising identifying (180) a reflection of the scattering of the acoustic signal at the one or more objects, wherein the reflection of the scattering of the acoustic signal at the one or more objects is disregarded in the detection of the one or more objects.

7. The method of any of claims 1 to 6, wherein the propagation time correction is performed for a range of possible seismic velocities, wherein a seismic velocity from the range of possible seismic velocities is selected for the propagation time correction based on a magnitude of a local maximum in the corresponding aggregation of the propagation time-corrected portions of the receiver signal,

or wherein seismic velocities tuned to the points of the detection grid are used for the propagation time correction for different material layers between the plurality of receivers and the points of the detection grid,

or wherein a constant seismic velocity is assumed for the propagation time correction.

8. The method of any of claims 1 to 7, wherein the portions of the receiver signal are grouped to the points of the detection grid based on a distance of the points of the detection grid to the receivers of the plurality of receivers and to at least one signal source of the plurality of acoustic signals.

9. The method of claim 8, wherein the portions of the receiver signal are separately grouped to the points of the detection grid for each acoustic signal.

10. The method of claim 8, wherein the portions of the receiver signal are grouped together to the points of the detection grid for a predefined number of points in time in the predefined temporal sequence.

11. The method of claim 8, wherein the portions of the receiver signal are grouped to the points of the detection grid for a predefined distance of the points of the detection grid to the receivers of the plurality of receivers and to the at least one signal source.

12. A program having a program code for performing the method of any of the preceding claims when the program code is executed on a computer, a processor, a control module or a programmable hardware component.

13. An apparatus (10) for detecting one or more objects in the seabed, the apparatus comprising:

an interface (12) for obtaining a receiver signal, the receiver signal being based on a scattering of a plurality of acoustic signals at the one or more objects in the seabed, the receiver signal being generated by a plurality of receivers; and

a processing module (14) configured to:

group portions of the receiver signal into points of a detection grid, the detection grid representing a grid at which points the one or more objects are located,

perform a propagation time correction of the portions of the receiver signal with respect to the points of the detection grid,

aggregate the propagation time-corrected portions of the receiver signal at the points of the detection grid,

calculate an envelope of an amplitude of the aggregation of the propagation time-corrected portions of the receiver signal, and

detect the one or more objects at the points of the detection grid based on the envelope of the amplitude of the aggregation of the propagation time-corrected portions of the receiver signal, wherein the detection of the one or more objects is based on the scattering of the plurality of acoustic signals at the one or more objects.

## Revendications

1. Procédé de détection d'un ou plusieurs objets dans le fond de la mer, le procédé comprenant le fait de :

obtenir (110) un signal de récepteur, le signal de récepteur étant basé sur une dispersion de plusieurs signaux acoustiques sur le ou les objets dans le fond de la mer, le signal de récepteur étant généré par une pluralité de récepteurs ;

regrouper (120) des parties du signal de récepteur à des points d'une trame de détection, la trame de détection représentant une trame, sur les points de laquelle le ou les objets sont localisés ;

effectuer (130) une correction de durée de propagation des parties du signal de récepteur par rapport aux points de la trame de détection ;

regrouper (140) les parties de durée de propagation corrigée du signal de récepteur sur les points de la trame de détection ;

calculer (150) une enveloppe d'une amplitude du regroupement des parties de durée de propagation corrigée du signal de récepteur ; et

détecter (190) le ou les objets sur les points de la trame de détection sur la base de l'enveloppe de l'amplitude du regroupement des parties de durée de propagation corrigée du signal de récepteur, la détection du ou des objets étant basée sur la dispersion des plusieurs signaux acoustiques sur le ou les objets.

2. Procédé selon la revendication 1, comprenant en outre le fait de calculer (160) une fonction de cohérence sur la base du regroupement des parties de durée de propagation corrigée du signal de récepteur, la fonction de cohérence étant basée sur une similitude entre des parties se suivant dans le temps du signal de récepteur, le ou les objets étant détectés sur la base de la fonction de cohérence.

3. Procédé selon la revendication 2, comprenant en outre le fait de calculer (170) une enveloppe pondérée sur la base de l'enveloppe et sur la base de la fonction de cohérence.

4. Procédé selon l'une des revendications 2 ou 3, dans lequel la fonction de cohérence est basée sur une analyse de ressemblance.

5. Procédé selon l'une des revendications 1 à 4, comprenant en outre le fait d'ajuster (145) le regroupement des parties de durée de propagation corrigée du signal de récepteur, pour obtenir une amplification de signal de parties de signal qui sont basées sur la dispersion des plusieurs signaux acoustiques sur des objets plus éloignés du ou des objets.

6. Procédé selon l'une des revendications 1 à 5, comprenant en outre le fait d'identifier (180) une réflexion de la dispersion du signal acoustique sur le ou les objets, la réflexion de la dispersion du signal acoustique sur le ou les objets étant laissée à l'écart lors de la détection du ou des objets.

7. Procédé selon l'une des revendications 1 à 6, dans lequel la correction de durée de propagation est effectuée pour une plage de vitesses sismiques possibles, une vitesse sismique étant sélectionnée parmi la plage de vitesses sismiques possibles sur la base d'une grandeur d'un maximum local dans le regroupement correspondant des parties de durée de propagation corrigée du signal de récepteur pour la correction de durée de propagation, ou dans lequel, pour la correction de durée de propagation, des vitesses sismiques réglées sur les points de la trame de détection sont utilisées pour différentes couches de matériau entre la pluralité de récepteurs et les points de la trame de détection, ou dans lequel, pour la correction de durée de propagation, une vitesse sismique constante est prise en compte.

8. Procédé selon l'une des revendications 1 à 7, dans lequel les parties du signal de récepteur sont regroupées par rapport aux points de la trame de détection sur la base d'une distance des points de la trame de détection par rapport aux récepteurs de la pluralité de récepteurs et par rapport à au moins une source de signal des plusieurs signaux acoustiques.

9. Procédé selon la revendication 8, dans lequel les parties du signal de récepteur pour chaque signal acoustique sont regroupées séparément par rapport aux points de la trame de détection.

10. Procédé selon la revendication 8, dans lequel les parties du signal de récepteur pour un nombre prédéfini d'instants dans la séquence temporelle prédéfinie sont regroupées ensemble par rapport aux points de la trame de détection.

11. Procédé selon la revendication 8, dans lequel les parties du signal de récepteur pour une distance prédéfinie des points de la trame de détection par rapport aux récepteurs de la pluralité de récepteurs et par rapport à l'au moins une source de signal sont regroupées par rapport aux points de la trame de détection.

12. Programme avec un code de programme pour réaliser le procédé selon l'une des revendications précédentes lorsque le code de programme est exécuté sur un ordinateur, un processeur, un module de contrôle ou un composant matériel programmable.

13. Dispositif (10) de détection d'un ou plusieurs objets dans le fond de la mer, le dispositif comprenant :

une interface (12) pour obtenir un signal de récepteur, le signal de récepteur étant basé sur une dispersion de plusieurs signaux acoustiques sur le ou les objets dans le fond de la mer, le signal de récepteur étant généré par une pluralité de récepteurs ; et
un module de traitement (14), configuré pour :

regrouper des parties du signal de récepteur à des points d'une trame de détection, la trame de détection représentant une trame, sur les points de laquelle le ou les objets sont localisés,
effectuer une correction de durée de propagation des parties du signal de récepteur par rapport aux points de la trame de détection,
regrouper les parties de durée de propagation corrigée du signal de récepteur sur les points de la trame de détection,
calculer une enveloppe d'une amplitude du regroupement des parties de durée de propagation corrigée du signal de récepteur, et
détecter le ou les objets sur les points de la trame de détection sur la base de l'enveloppe de l'amplitude du regroupement des parties de durée de propagation corrigée du signal de récepteur, la détection du ou des objets étant basée sur la dispersion des plusieurs signaux acoustiques sur le ou les objets.

ERHALTEN EINES EMPFÄNGERSIGNALS

— 110

GRUPPIEREN VON ANTEILEN
DES EMPFÄNGERSIGNALS

— 120

DURCHFÜHREN EINER LAUFZEITKORREKTUR

— 130

ZUSAMMENFASSEN DER
LAUFZEITKORRIGIERTEN ANTEILE

— 140

DETEKTIEREN VON EIN ODER MEHREREN OBJEKTEN

— 190

Fig. 1a

EMPFÄNGER-
SIGNAL

SCHNITTSTELLE

— 12

VERARBEITUNGS-
MODUL

DETEKTION VON
OBJEKTEN

— 10    — 14

Fig. 1c

ERHALTEN EINES EMPFÄNGERSIGNALS

110

UNTERDRÜCKEN EINER REFLEKTION

115

GRUPPIEREN VON ANTEILEN
DES EMPFÄNGERSIGNALS

120

DURCHFÜHREN EINER LAUFZEITKORREKTUR

130

ZUSAMMENFASSEN DER
LAUFZEITKORRIGIERTEN ANTEILE

140

ANPASSEN DER ZUSAMMENFASSUNG

145

BERECHNEN EINER EINHÜLLENDEN

150

BERECHNEN EINER KOHÄRENZFUNKTION

160

BERECHNEN EINER GEWICHTETEN EINHÜLLENDEN

170

IDENTIFIZIEREN EINER REFLEKTION DER STREUUNG

180

DETEKTIEREN VON EIN ODER MEHREREN OBJEKTEN

190

Fig. 1b

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107817523 A

**In der Beschreibung aufgeführte Nicht-Patentliteratur**

- **BERKOVITCH et al.** Diffraction imaging by multi-focusing. *GEOPHYSICS*, November 2009, vol. 74
- **KANASEWICH et al.** Imaging discontinuities on seismic sections. *GEOPHYSICS*, March 1988, vol. 53
- **BANSAL** ; **IMHOF**. Diffraction enhancement in prestack seismic data. *GEOPHYSICS*, May 2005, vol. 70
- **LANDA** ; **KEYDAR**. *Seismic monitoring of diffraction images for detection of local heterogeneities*, 1998
- **MOSER** ; **HOWARD**. *Diffraction imaging in depth*, 2008
- **WU** ; **AKI**. *Elastic wave scattering by a random medium and the small-scale inhomogeneities in the lithosphere*, 1985
- Introduction: Seismic Wave Scattering in Three-dimensionally Heterogeneous Earth. *Scattering and Attenuations of Seismic Waves*, 1988
- **STURZU et al.** *Diffraction imaging using specularity gathers*, 2014
- **YILMAZ**. *Seismic data processing. Society of Exploration Geophysicists*, 1991
- **BANSAL** ; **IMHOF**. *Diffraction enhancement in prestack seismic data*, 2016
- **KANASEWICH** ; **PHADKE**. *Imaging discontinuities on seismic sections*, 1988
- **YILMAZ**. *Seismic data processing*, 1991
- **SHERIFF** ; **GELDART**. *Clearbout*, 1995